Europäisches Patentamt

European Patent Office

Office européen des brevets

(19)

(11) Numéro de publication: **0 118 561**

**B1**

(12) **FASCICULE DE BREVET EUROPÉEN**

(45) Date de publication du fascicule du brevet:
02.11.88

(21) Numéro de dépôt: 82902551.9

(22) Date de dépôt: 30.08.82

(86) Numéro de dépôt international:
PCT/JP 82/00347

(87) Numéro de publication internationale:
WO 84/00932 (15.03.84 Gazette 84/07)

(51) Int. Cl.⁴: **B 61 B 13/10**, B 61 H 11/06

(54) Système de transport souterrain à grande vitesse.

(43) Date de publication de la demande:
19.09.84 Bulletin 84/38

(45) Mention de la délivrance du brevet:
02.11.88 Bulletin 88/44

(84) Etats contractants désignés:
AT DE FR

(56) Documents cité:
CH-A-577 402
DE-A-1 580 876
FR-A-1 114 344

ZEITSCHRIFT DES ÖSTERREICHISCHEN
INGENIEUR- UND ARCHITEKTEN-VEREINS, vol.
100, no. 3/4, 3rd February 1955, page 29;
OSTERSETZER: "Projekt einer gleislosen
Untergrundbahn"
ZEV-GLASER'S ANNALEN, vol. 100, no. 6, June
1976, pages 192-193; V. JUNG: "Die Cyclobahn.
Gravitationsantrieb im Nahverkehr - Vorteile und
Probleme"

Le dossier contient des informations techniques
présentées postérieurement au dépôt de la
demande et ne figurant pas dans le présent
fascicule.

(73) Titulaire: **MATSUKATA, Kosuke**, 23- 18 Toyookacho Tsurumi- ku Yokohama- shi, Kanagawa- ken
230 (JP)

(72) Inventeur: **MATSUKATA, Kosuke**, 23- 18 Toyookacho Tsurumi- ku Yokohama- shi, Kanagawa- ken
230 (JP)

(74) Mandataire: **Rinuy, Guy, Cabinet Rinuy et
Santarelli 14, Avenue de la Grande Armée,
F-75017 Paris (FR)**

LIBER, STOCKHOLM 1988

## Description

L'invention concerne un système de transport souterrain à grande vitesse.

Un domaine dans lequel il est possible de développer un système de transport terrestre à grande vitesse, destiné à un grand nombre de passagers, est le système souterrain. Pour obtenir la force de traction nécessaire aux grandes vitesses, il est essentiel d'accroître le produit du coefficient de frottement entre la surface du sol et la roue de traction par la charge portée par la roue. A cet égard, lorsque la valeur maximale du coefficient de frottement est limitée, un simple accroissement de la charge au prix de la charge utile ne résout pas le problème fondamental. Il est important d'accroître la charge réelle par des moyens autres que le simple apport d'un lest sur la roue motrice. On peut alors envisager un procédé de production d'une pesanteur artificielle. L'invention permet de réaliser une pesanteur artificielle dans la construction d'un tel système souterrain, sous la commande de l'homme. Conformément à cette méthode, en utilisant la surface intérieure du tunnel, on peut créer une pesanteur supplémentaire sans perte de la capacité de charge utile du système de transport. De cette manière, on peut atteindre une vitesse de 500 km/h uniquement en tunnel. Equipé d'un nouveau système de freinage par pression d'air, du type à déflecteurs, un train à grande vitesse, circulant à 500 km/h, peut être mis en circulation efficacement et en toute sécurité dans le tunnel.

Le système de transport souterrain à grande vitesse, selon la présente invention, est du type comprenant un tunnel circulaire, au moins un véhicule circulant dans ce tunnel circulaire, avec au moins un jeu de rayons de ce véhicule, chaque jeu ayant trois rayons disposés symétriquement et radialement par rapport à un axe coaxial avec l'axe du tunnel, un châssis reliant ces différents rayons, une roue motrice étant située à l'extrémité de chacun de deux de ces rayons et une roue porteuse à l'extrémité de ce troisième rayon, ces deux roues motrices étant disposées selon une ligne horizontale imaginaire située entre le fond et le milieu du tunnel et ces deux roues motrices étant en contact avec la surface intérieure du tunnel, et des moteurs de traction étant reliés à ces roues motrices et les actionnant pour faire circuler le véhicule dans le tunnel circulaire, dans lequel chaque rayon peut être allongé ou rétracté et se compose d'une partie d'extrémité montée, télescopiquement dans une partie principale, ces deux parties d'extrémité et principale définissant entre elles une chambre hydraulique et un système de régulation hydraulique relié à ces chambres hydrauliques permettant l'extension des parties d'extrémité de ces rayons.

Ce système, selon la présente invention, est caractérisé en ce qu'il comporte:

d'une part, des moyens de stabilisation comprenant:

a) un rayon fixé à l'axe central du véhicule et s'étendant vers le mileu de la circonférence inférieure du tunnel, à proximité et à une certaine distance du tunnel et portant un nombre pair de roues de stabilisation, disposées transversalement de chaque côté de ce rayon et en contact avec deux surfaces planes, entre lesquelles se déplacent ces roues de stabilisation lors du déplacement du véhicule dans le tunnel et

b) un dispositif d'application d'une pression extérieure sur ces roues de stabilisation pour s'assurer qu'elles restent en contact avec lesdites surfaces planes lors du déplacment du véhicule dans le tunnel, ce dispositif comprenant un ensemble de cylindres hydrauliques auquel est reliée d'une manière extensible chaque roue de stabilisation et une source de pression hydraulique régulée permettant d'envoyer une pression hydraulique régulée dans ces cylindres pour appliquer les roues de stabilisation extérieurement contre lesdites surfaces planes,

et, d'autre part, un dispositif de freinage à déflecteurs comprenant:

a) des déflecteurs de freinage,

b) des moyens de commande de l'extension ou du retrait de ces déflecteurs permettant à ces derniers de faire saillie à l'extérieur de la caisse du véhicule pour offrir de la résistance à l'air et provoquer une décélération du véhicule, ces moyens de commande comportant deux cylindres hydrauliques pour déflecteur et une source régulée de pression hydraulique,

c) des trappes, disposées le long de la surface extérieure du véhicule et pouvant se mettre sélectivement en place pour recouvrir lesdits déflecteurs lorsqu'ils sont en position rétractée et maintenir le profil aérodynamique du véhicule et

d) un ensemble d'émission de jets d'air comprimé à haute pression situés de chaque côté des déflecteurs pour rejeter de l'air à haute pression, en direction du déplacement du véhicule au cours de la décélération, pour augmenter la force defreinage des dits-déflecteurs, cet air étant fourni par une source d'air comprimé d'une manière sélective.

Conformément à l'invention, une pesanteur artificielle peut être produite par l'utilisation d'un espace de grande longueur, à savoir un tunnel ou souterrain, dans lequel certains moyens sont prévus. Dans le transport classique à grande vitesse sur rail, on pense que la vitesse maximale que l'on puisse atteindre est comprise entre 300 et 380 km/h. Le critère déterminant la limite supérieure de la vitesse est le produit du coefficient de frottement entre le rail et la charge qu'il supporte, par la charge reposant sur lui. Selon les laboratoires Bridgestone, le coefficient de frottement diminue de moins de 10 % sous l'effet d'un accroissement de la charge à une vitesse de 500 km/h. Etant donné que le coefficient de frottement ne peut être augmenté, il faut accroître la charge de la roue. Si la charge exercée sur les roues augmente, l'effort de traction peut être également augmenté. De cette manière, on peut atteindre 500 km/h en tunnel. A

cette vitesse, dans le cas d'une distance de 515 km telle que celle séparant Tokyo d'Osaka, étant donné qu'il n'est pas nécessaire de changer de moyen de transport, un système de transport souterrain à grande vitesse peut concurrencer efficacement le système de transport aérien actuel. Dans un voyage effectué actuellement par air, les temps de transits terminaux demandés comprennent 15 minutes de monorail à Tokyo et 30 minutes d'autobus à Osaka pour 1 heure de vol à la vitesse de 800 km/h. A présent, l'obtention de l'effort de traction nécessaire pour un tel système peut être comprise d'après le principe général de la présente invention. Dans un tunnel circulaire, des roues motrices, disposées aux extrémités de rayons extensibles espacés régulièrement d'angles égaux et partant du centre du tunnel, sont appliquées contre la surface de la paroi du tunnel. Le châssis supporté par ces roues motrices porte les moyens moteurs fournissant la puissance nécessaire à la vitesse souhaitée. En général, deux roues motrices et une roue porteuse, espacées de 120°, satisfont cette exigence. Cependant, si cela est nécessaire et si davantage de puissance est demandée, on peut également considérer un jeu de quatre roues motrices et d'une roue porteuse.

Dans la forme de réalisation décrite dans le brevet japonais N° 686 545, pour stabiliser le châssis triangulaire, sur les deux côtés du véhicule, des jets d'air étaient dirigés contre des déflecteurs réalisés de façon spéciale, fixés à la surface de la paroi du souterrain, pour produire l'effet de plafond de l'action stabilisante. A la place de ce système, dans la présente invention, une paire de rails de guidage de forme en L est utilisée, avec un espace suffisant entre les rails pour permettre le passage d'un rayon central de stabilisation fixé au centre d'un carter d'appui et d'un châssis triangulaire et portant des roues de guidage montées sur un support extensible, perpendiculaire au rayon et appliquées contre les rails de guidage de forme en L. Pour négocier un tunnel en courbe, on accroît l'écartement de ces rails de forme en L. Grâce à cette variation, la surface supérieure du tunnel est dégagée pour permettre le mouvement et la manoeuvre de déflecteurs de freinage dépassant de la caisse du véhicule. Pour accroître l'effet utile de ces déflecteurs, un jet d'air supplémentaire est dirigé face à l'air arrivant le long de la caisse afin de dissiper l'énergie accumulée.

Le système de freinage des véhicules à grande vitesse prend une part importante dans leur succès. Outre les freins à disques, des déflecteurs sont utilisés de manière à dépasser de la surface de la caisse, sur les deux côtés, en deux emplacements des jets d'air projetés en avant des déflecteurs coopérant avec ces derniers. Le brevet japonais N° 774 871 décrit un type simple de frein à déflecteur.

Dans le système de refroidissement d'un réseau ferré souterrain, l'air chaud ne peut être évacué à l'extérieur des véhicules. Conformément à ce système, un véhicule d'alimentation en air froid est prévu. Ainsi, des glaçons cubiques de 3 cm³ sont produits dans des installations situées en divers points stratégiques du réseau souterrain. Le petit volume des glaçons facilite leur production par de petits réfrigérateurs automatiques plutôt que par la mise en oeuvre d'un procédé classique utilisant un système de réfrigération important. De cette manière, les voyageurs peuvent bénéficier d'un voyage en souterrain en atmosphère refroidie. A une vitesse élevée à laquelle les bandages peuvent présenter un échauffement important, le refroidissement des bandages est réalisé à l'aide du dispositif décrit dans le brevet japonais N° 1 006 297.

En ce qui concerne la traction assurée par des moteurs installés dans un châssis, ces moteurs peuvent être regroupés en tête et en queue du train afin que les voitures à voyageurs du train soient isolées efficacement des bruits ou des vibrations.

L'invention sera décrite plus en détail en regard des dessins annexés à titre d'exemples nullement limitatifs et sur lesquels:

la figure 1 est une coupe longitudinale montrant l'interieur de véhicules destinés à un chemin de fer souterrain perfectionné à grande vitesse, les véhicules étant représentés dans un tunnel;

la figure 2 est une coupe transversale d'une forme fondamentale de réalisation de l'invention;

la figure 3 est une coupe transversale, analogue à celle de la figure 2, montrant un couloir central de passage et des freins à déflecteurs en action sur le côté droit;

la figure 4 est une coupe transversale du tunnel montrant les freins à déflecteurs rentrés dans la caisse et revouverts par des trappes;

la figure 5 est une coupe transversale détaillée d'un dispositif présentant une sortie de jet d'air;

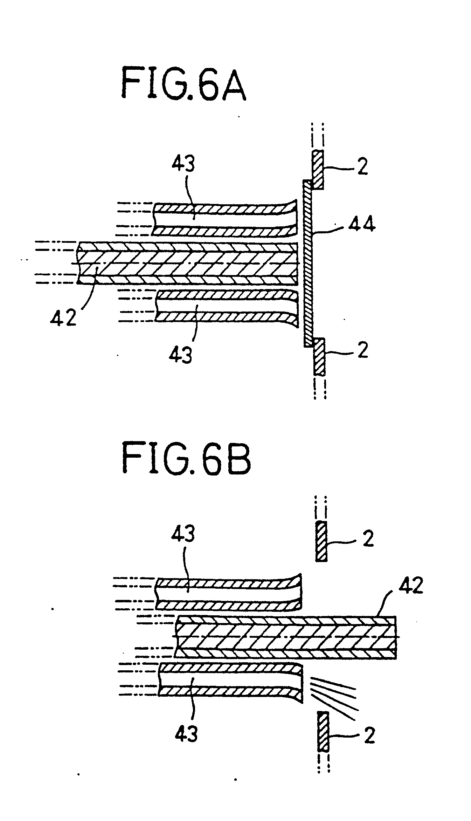

les figures 6, 6A et 6B montrent en coupe longitudinale détaillée, les positions relatives d'un déflecteur et d'un orifice de sortie d'un jet d'air;

la figure 7 est une coupe longitudinale d'un véhicule d'alimentation en air froid;

la figure 8 est une coupe longitudinale d'un véhicule de base et d'un autre type de véhicule destiné à assurer la traction, attelé au véhicule de base, les véhicules moteurs étant disposés en tête et en queue du train;

la figure 9 est une coupe transversale d'un souterrain, montrant les lignes électriques aériennes et les rails inférieurs de guidage;

la figure 10 est une coupe transversale partielle montrant un détail d'une ligne électrique aérienne; et

la figure 11 est une coupe transversale d'un souterrain occupé par un véhicule à quatre dispositifs à roue de traction et un dispositif à roue porteuse.

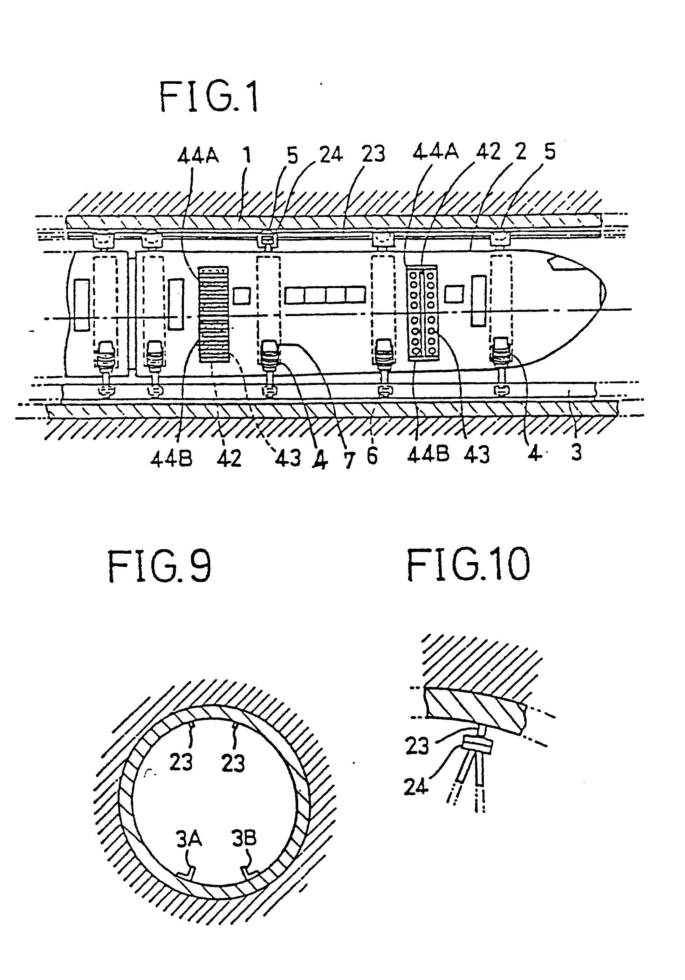

On se referera à présent aux figures 1, 2, 9, 10 et 11 qui représentent une paroi tubulaire 1 en béton ayant précisément la forme d'un cercle et entourée du terrain 10. La paroi de béton comporte à sa partie inférieure deux cornières centrées 3A, 3B qui s'étendent le long du tunnel, à une certaine distance circonférentielle l'une de l'autre, tandis que deux lignes électriques aériennes 23 d'alimentation sont fixées solidement à proximité de la partie la plus haute de la paroi. Pour maintenir un véhicule 2 au centre du tube ainsi formé, l'axe central 8 passant au centre d'un châssis triangulaire 39 coïncide avec le centre du tube. Des rayons 9B, 9C et 9A sont équipés de roues motrices 4B, 4C et d'une roue porteuse 5 destinées à porter sous une certaine pression contre la surface intérieure du tube 1. Ces rayons sont soumis à l'action d'une pression d'huile constante et l'axe central 8 coïncide avec le centre du tube. Ainsi, le bandage de chaque roue de traction est toujours soumis à une pression égale et souhaitée. Cette pression est régulée par une armoire hydraulique 17. L'effort de traction du train est proportionnel au produit de la pression appliquée aux bandages et du coefficient de frottement entre la surface des bandages et la surface de la paroi du tunnel. Dans la mesure où un bandage peut le supporter, l'effort de traction demandé s'exerce parallèlement à la direction de l'axe central. Dans le passé, sur une voie ferrée classique, si l'on veut augmenter la pression exercée sur le rail, il n'existe pas d'autres moyens que celui d'augmenter la charge appliquée au rail. Si cet accroissement consiste à augmenter la masse appliquée au rail, la masse de la charge utile doit être réduite de façon correspondante. Ce phénomène limite la vitesse des trains à 380 km/h, constituant la plus haute vitesse qu'il est possible d'atteindre. On souhaite à présent une vitesse de 500 km/h. Pour satisfaire cette exigence, il faut faire appel à l'invention.

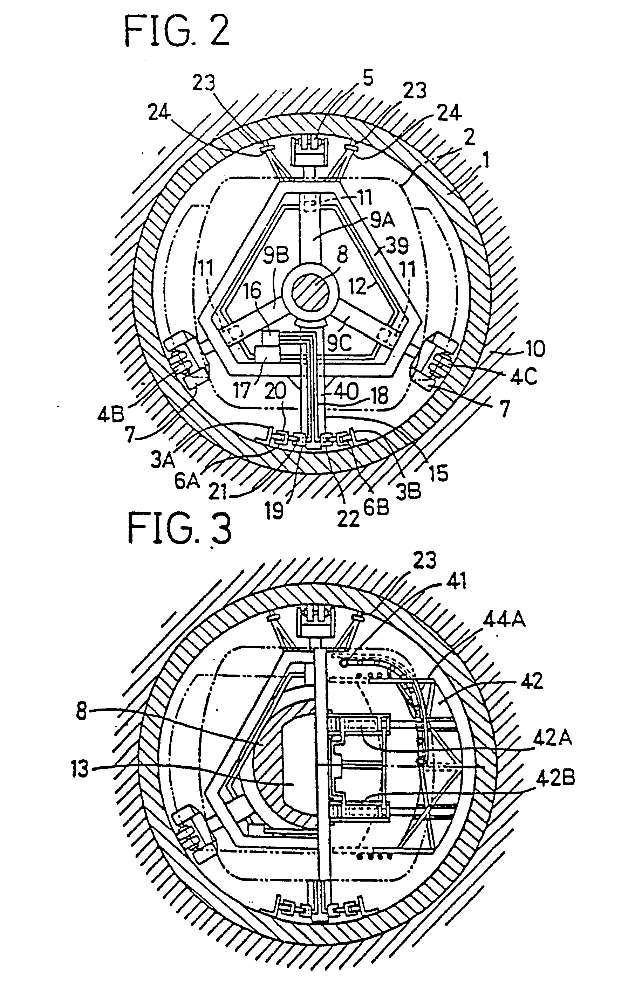

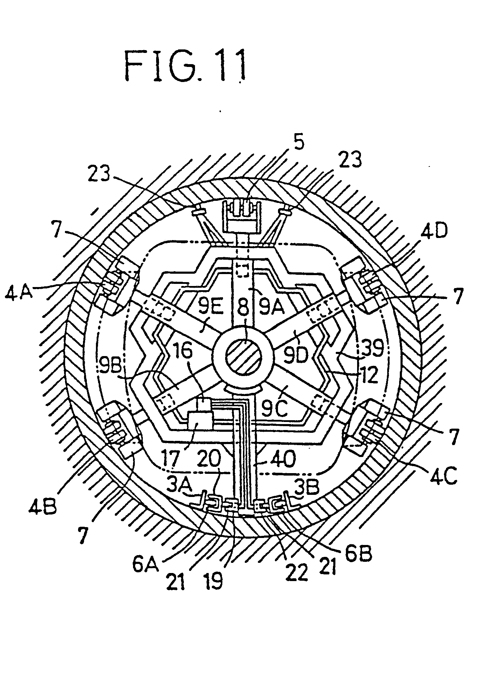

Selon l'invention, des châssis ou cadres triangulaires sont utilisés dans la caisse du véhicule. Une comparaison des figures 2 et 11 montre que, sur la première, on utilise deux groupes de roues motrices alors que, sur la seconde, on utilise quatre groupes de roues motrices. Pour obtenir la pesanteur artificielle demandée, un certain nombre de châssis triangulaires selon l'invention doit être mis en place dans l'espace fermé délimité à l'intérieur du tunnel. Dans le cas où la forme de réalisation de la figure 1 ne suffit pas à cet effet, on peut adopter la variante de la figure 11. Pour la première fois, la présente invention propose d'élever la vitesse des trains au-delà des valeurs reconnues jusqu'à présent.

On se référera à présent aux figures 2, 3, 4, 5 et 11. Alors que les figures 2, 3, 4 et 5 représentent une roue porteuse 5 et des roues motrices 4B et 4E, la figure 11 représente d'autres roues motrices 4A et 4D, permettant ainsi un accroissement de l'effort total de traction. Dans le brevet japonais N° 686 545 précité, des moyens sont prévus pour stabiliser le châssis triangulaire à l'aide d'un élément s'étendant transversalement, à partir duquel un jet d'air comprimé est dirigé contre des déflecteurs spéciaux fixés à la surface de la paroi du tunnel, sur les deux côtés. Selon l'invention, étant donné que des déflecteurs faisant saillie pour le freinage de la caisse du véhicule sont prévus, cette nouvelle forme de réalisation nécessite d'éliminer le système ancien de stabilisation, car les éléments fixés à la paroi constituent des obstacles gênant l'action des nouveaux déflecteurs faisant saillie de la caisse du véhicule. Au-dessous de l'axe central 8, un nouveau rayon vertical 40 est fixé rigidement au carter d'appui de l'axe central et à un élément horizontal du châssis triangulaire 39. L'extrémité inférieure de ce rayon 40 de stabilisation porte, sur ses deux côtés, des éléments 19 qui leur sont perpendiculaires et aux extrémités desquels sont disposées des roues 6A et 6B soumises à une pression d'huile et réalisant ainsi un contact étroit entre les véhicules et les rails de guidage. Lorsque le tunnel décrit une courbe, la distance entre les deux rails de guidage de forme en L est augmentée afin que tout type de courbe puisse être négocié.

Les brevets précités décrivent un type de véhicule comportant deux roues motrices et une roue porteuse espacées de 120°.

Conformément à l'invention, hormis deux groupes de dispositifs de traction, quatre groupes de moteurs de traction sont installés, avec une roue porteuse et un rayon 40 de stabilisation, les angles compris entre les rayons étant de 60° et le rayon de stabilisation étant disposé entre les groupes, afin d'accroître la force de traction exercée par un châssis à plusieurs angles.

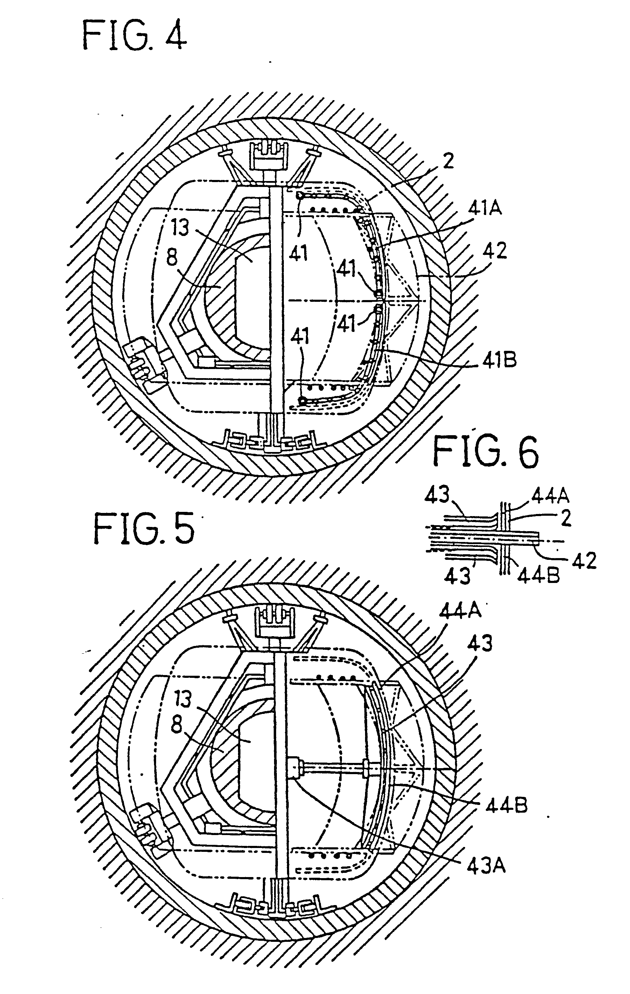

Le dispositif de freinage d'un système de transport à grande vitesse est très important. Dans le cas d'un véhicule à moteur linéaire, une vitesse élevée peut être obtenue et dans le cas d'un souterrain à dépression, la vitesse peut être encore davantage élevée. L'énergie accumulée par un véhicule à moteur linéaire se déplaçant à grande vitesse ne peut être absorbée que par l'application d'un jet de poussée opposé ou par l'utilisation de déflecteurs plongés dans de l'eau (voir les demandes de brevets japonaises N° 002530/1981 et 14375/1981) ou bien, dans un tunnel à dépression, sous l'effet de la pesanteur terrestre, le véhicule doit être freiné progressivement après avoir atteint une vitesse élevée. On peut à présent se reporter aux figures 1, 3, 4 et 5 qui montrent toutes les roues motrices 4A, 4B, 4C, 4D et 5 équipées d'un disque de freinage. Hormis ces freins, des déflecteurs de freinage sont montés sur chaque véhicule. Sur la figure 4, des trappes 41A et 41B peuvent être ouvertes par déplacement le long de la surface de la caisse, ces trappes étant reliées à une chaîne que l'on fait tourner au moyen d'une roue dentée. Sur la figure 3, un déflecteur 42 est commandé par des cylindres hydrauliques 42A et 42B et il peut être déplacé afin de faire saillie à l'extérieur de la caisse 2. De plus, un jet de contre-poussée est produit au moyen d'air à haute pression comprimé à l'intérieur du véhicule 2. Ainsi, l'association du déflecteur et du jet d'air

à haute pression est réalisée pour le déplacement du véhicule vers l'avant ou vers l'arrière, chacun de ces éléments permettant de faire avancer ou reculer le véhicule. Sur la figure 1, les déflecteurs sont disposés sur les deux côtés de la caisse 2 et ils sont relativement décalés les uns par rapport aux autres, l'effet de lacet pouvant être aisément limité par le jet d'air utilisé. Il existe un projet consistant à utiliser un tunnel à dépression, dont la surface intérieure est revêtue de résine, avec un système de véhicule à moteur linéaire. Dans un tunnel à dépression, le freinage réalisé au moyen de déflecteurs ne peut s'effectuer de la même manière que dans un tunnel rempli d'air, car l'énergie cinétique accumulée ne peut être aisément dissipée par un système de freinage classique, ce qui rend donc la distance d'arrêt très longue pour le véhicule.

Selon l'invention, un véhicule indépendant 28 d'alimentation en air froid est prêt à être attelé si cela est nécessaire. De petits glaçons 35 de 3 cm³ sont toujours en réserve. Un ventilateur à moteur 37, disposé dans le véhicule 28 d'alimentation en air froid, produit de l'air froid en faisant fondre ces glaçons. Un véhicule d'alimentation en air froid, prêt à partir, peut être mis à disposition dans un dépôt local. Il n'est pas nécessaire d'utiliser un système de réfrigération de grande dimension, du fait que des systèmes modernes de petite dimension sont à présent disponibles.

Pour les roues motrices, on utilise des bandages. Le refroidissement de ces bandages peut être assuré, si cela est nécessaire, par le véhicule d'alimentation en air froid (voir brevet japonais N° 1 006 297).

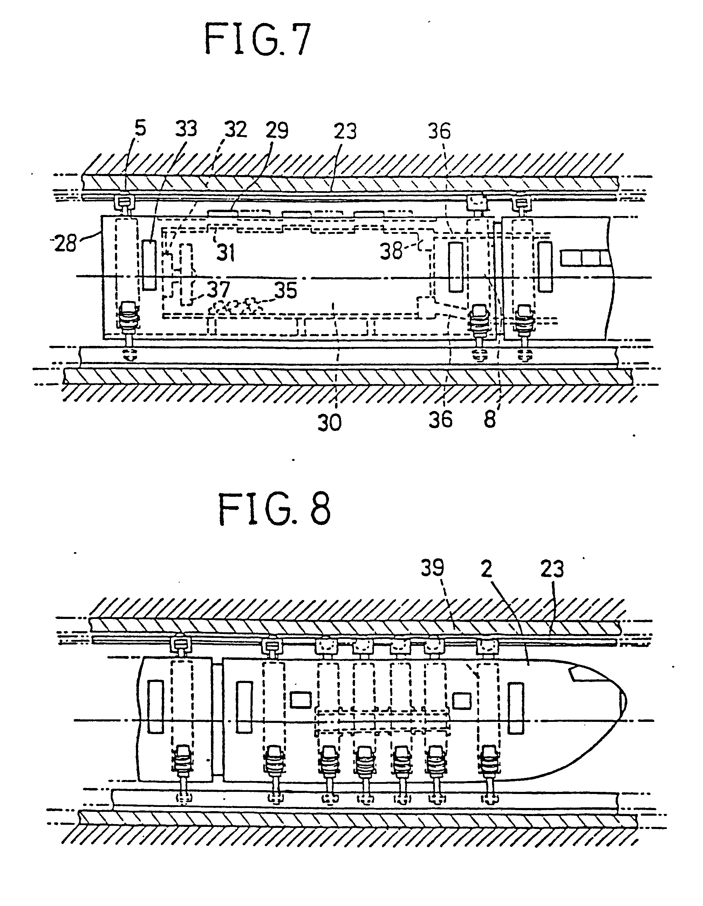

Pour obtenir l'effort de traction nécessaire, les roues motrices peuvent être groupées dans des véhicules placés en tête ou en queue, comme montré sur la figure 8. Les figures 2 et 3 sont identiques, hormis que la figure 3 montre un couloir de circulation prévu le long de l'axe central 8.

La présente invention exige la présence d'un espace limité. A cet effet, on utilise un tunnel. Le tunnel est réalisé sous la forme d'un tube circulaire et plusieurs rayons s'étendent de son centre vers la surface intérieure du tube, à des angles de 30 ou 120°, de façon à s'appliquer sous une certaine pression contre la surface de la paroi du tunnel, la pression demandée étant supérieure à la charge propre des moyens de support. Sous cette pression accrue, on obtient une plus grande force de traction par les roues disposées aux extrémités des rayons, compte tenu du coefficient de frottement entre la surface de la paroi du tunnel et les roues qui sont en contact avec elle. Si ce principe est appliqué à un train souterrain à grande vitesse tel que celui décrit, alors que la vitesse de 380 km/h est considérée comme maximale pour un train classique, on peut élever la vitesse à 500 km/h. Le point le plus important pour un train à grande vitesse est l'efficacité du freinage. Aucune application industrielle n'est possible sans freinage très efficace. Selon l'invention, hormis les freins à disques équipant les roues sous pression, des freins à déflecteurs utilisant la résistance de l'air font saillie de la surface extérieure du véhicule, sur les deux côtés, augmentant ainsi la sécurité et permettant la réalisation de ce système de transport. Dans le cas du véhicule à moteur linéaire du type flottant, étant donné qu'il est porté par l'air après sa montée en vitesse, l'énergie accumulée par la caisse portée par l'air ne peut être aisément utilisée par des freins magnétiques et électriques, à moins de mettre en oeuvre un certain type de frein hydraulique ou à contre-poussée. En outre, des problèmes pouvant avoir des conséquences catastrophiques pour le train apparaissent en cas de coupure de l'alimentation en énergie électrique des dispositifs fonctionnels.

**Revendication**

Système de transport souterrain à grande vitesse du type comprenant un tunnel circulaire (1), au moins un véhicule (2) circulant dans ce tunnel circulaire, avec au moins un jeu de rayons de ce véhicule, chaque jeu ayant trois rayons (9A, 9B, 9C) disposés symétriquement et radialement par rapport à un axe (8) coaxial avec l'axe du tunnel, un châssis (39) reliant ces différents rayons, une roue motrice (4B, 4C) étant située à l'extrémité de chacun de deux de ces rayons et une roue porteuse (5) à l'extrémité de ce troisième rayon, ces deux roues motrices étant disposées selon une ligne horizontale imaginaire située entre le fond et le milieu du tunnel et ces deux roues motrices étant en contact avec la surface intérieure du tunnel, et des moteurs de traction (7) étant reliés à ces roues motrices et les actionnant pour faire circuler le véhicule dans le tunnel circulaire, dans lequel chaque rayon peut être allongé ou rétracté et se compose d'une partie d'extrémité montée, télescopiquement dans une partie principale, ces deux parties d'extrémité et principale définissant entre elles une chambre hydraulique et un système de régulation hydraulique relié à ces chambres hydrauliques permettant l'extension des parties d'extrémité de ces rayons.

Système caractérisé en ce qu'il comporte:
d'une part, des moyens de stabilisation comprenant:
a) un rayon (40) fixé à l'axe central (8) du véhicule et s'étendant vers le milieu de la circonférence inférieure du tunnel, à proximité et à une certaine distance du tunnel et portant un nombre pair de roues de stabilisation (6A, 6B), disposées transversalement de chaque côté de ce rayon et en contact avec deux surfaces planes (3A, 3B), entre lesquelles se déplacent ces roues de stabilisation lors du déplacement du véhicule dans le tunnel et
b) un dispositif (17) d'application d'une pression extérieure sur ces roues de stabilisation

pour s'assurer qu'elles restent en contact avec lesdites surfaces planes lors du déplacement du véhicule dans le tunnel, ce dispositif comprenant un ensemble de cylindres hydrauliques auquel est reliée d'une manière extensible chaque roue de stabilisation et une source de pression hydraulique régulée permettant d'envoyer une pression hydraulique régulée dans ces cylindres pour appliquer les roues de stabilisation extérieurement contre lesdites surfaces planes,

et, d'autre part, un dispositif de freinage à déflecteurs comprenant:

a) des déflecteurs de freinage (42),

b) des moyens de commande de l'extension ou du retrait de ces déflecteurs permettant à ces derniers de faire saillie à l'extérieur de la caisse du véhicule pour offrir de la résistance à l'air et provoquer une décélération du véhicule, ces moyens de commande comportant deux cylindres hydrauliques (42A et 42B) pour déflecteur et une source régulée de pression hydraulique,

c) des trappes (41), disposées le long de la surface extérieure du véhicule et pouvant se mettre sélectivement en place pour recouvrir lesdits déflecteurs (42) lorsqu'ils sont en position rétractée et maintenir le profil aérodynamique du véhicule et

d) un ensemble d'émission de jets d'air comprimé à haute pression (43) situés de chaque côté des déflecteurs (42) pour rejeter de l'air à haute pression, en direction du déplacement du véhicule au cours de la décélération, pour augmenter la force de freinage desdits déflecteurs, cet air étant fourni par une source d'air comprimé d'une manière sélective.

## Patentanspruch

Unterirdisches Hochgeschwindigkeitstransportsystem, das einen kreisförmigen Tunnel (1) umfaßt, wenigstens ein Fahrzeug (2), das in diesem kreisförmigen Tunnel umläuft, mit wenigstens einem Satz von Streben dieses Fahrzeugs, wobei jeder Satz drei Streben (9A, 9B, 9C) aufweist, die symetrisch und radial bezüglich einer mit der Achse des Tunnels koaxialen Achse (8) angeordnet sind, ein Chassis (39), das diese verschiedenen Streben verbindet, ein Antriebsrad (4B, 4C), das am Ende von jeder dieser beiden Streben angeordnet ist und ein Trägerrad (5) am Ende dieser dritten Strebe, wobei diese zwei Antriebsräder gemäß einer horizontalen imaginären Linie angeordnet sind, die zwischen dem Grund und der Mitte des Tunnels liegt und wobei diese zwei Antriebsräder in Kontakt mit der inneren Oberfläche des Tunnels sind, und Antriebsmotoren (7), die mit diesen Antriebsrädern verbunden sind und sie betätigen, um das Fahrzeug in dem kreisförmigen Tunnel umlaufen zu lassen, in dem jede Strebe verlängert oder zurückgezogen werden kann und aus einem teleskopartig in einem Hauptteil befestigten Endteil besteht, wobei diese beiden End- und Hauptteile zwischen sich eine hydraulische Kammer und ein hydraulisches Regulationssystem bestimmen, das mit diesen hydraulischen Kammern verbunden ist, wodurch das Ausfahren der Endteile dieser Streben ermöglicht wird,

dadurch gekennzeichnet,

daß das System einesteils Stabilisationsmittel folgender Ausgestaltung umfaßt:

a) eine Strebe (40), die an der zentralen Achse (8) des Fahrzeugs befestigt ist und sich zur Mitte des unteren Kreisumfangs des Tunnels in der Nähe und in einem gewissen Abstand vom Tunnel erstreckt und eine gerade Anzahl von Stabilisationsrädern (6A, 6B) trägt, die quer auf jeder Seite dieser Strebe und in Kontakt mit zwei ebenen Oberflächen (3A, 3B) angeordnet sind, zwischen denen sich diese Stabilisationsräder bei der Fortbewegung des Fahrzeugs im Tunnel fortbewegen und

b) eine Einrichtung (17) zum Aufbringen eines äußeren Drucks auf diese Stabilisationsräder, um sicherzustellen, daß sie in Kontakt mit den ebenen Oberflächen beim Fortbewegen des Fahrzeugs in dem Tunnel bleiben, wobei diese Einrichtung eine Anordnung von Hydraulikzylindern umfaßt, mit denen auf eine ausfahrbare Weise jedes Stabilisationsrad verbunden ist, und eine regulierte hydraulische Druckquelle, mit der ein regulierter hydraulischer Druck in diesen Zylindern aufgebracht werden kann, um die Stabilisationsräder von außen gegen die ebenen Oberflächen anzulegen, und daß das System andererseits eine Deflektor-Bremsvorrichtung mit folgender Ausgestaltung umfaßt:

a) Bremsdeflektoren (42),

b) Steuermittel zum Ausfahren oder zum Zurückziehen dieser Deflektoren, die diesen letzteren erlauben, über das Äußere des Fahrzeugkastens hervorzutreten, um der Luft Widerstand zu leisten und eine Verzögerung des Fahrzeugs hervorzurufen, wobei diese Steuermittel zwei hydraulische Zylinder (42A und 42B) für den Deflektor und eine regulierte hydraulische Druckquelle umfassen,

c) Klappen (41), die längs der äußeren Oberfläche des Fahrzeugs angeordnet sind und wahlweise in Stellung gebracht werden können, um die Deflektoren (42) zu bedecken, wenn sie in zurückgezogener Stellung sind, und um das ärodynamische Profil des Fahrzeugs aufrechtzuerhalten und

d) eine Anordnung zum Ausstoßen von Strahlen von auf hohen Druck komprimierter Luft (43), die auf jeder Seite der Deflektoren (42) angeordnet ist, um die Luft mit hohem Druck in Richtung der Fortbewegung des Fahrzeugs während der Verzögerung zurückzustoßen, um die Bremskraft der Deflektoren zu erhöhen, wobei diese Luft durch eine Luftguelle hervorgebracht und auf eine auswählbare Weise verdichtet wird.

## Claim

A high speed underground transport system of the kind comprising a circular tunnel (1), at least one vehicle (2) circulating in this circular tunnel, with at least one set of radial arms, each set comprising three radial arms (9A, 9B, 9C) disposed symmetrically radially with respect to an axis (8) coaxial with the axis of the tunnel, a chassis (39) connecting these various radial arms, a driving wheel (4B, 4C) disposed at the end of each of two of the radial arms and a bearing wheel (5) at the end of the third radial arm, the two driving wheels being disposed along an imaginary horizontal line between the bottom and the middle of the tunnel and these two driving wheels being in contact with the internal surface of the tunnel, and traction motors (7) connected to these driving wheels and driving them to make the vehicle circulate in the circular tunnel, wherein each radial arm may be extended or retracted, the radial arm consisting of an end part mounted telescopically in a main part, these two end and main parts defining between them a hydraulic chamber, and a hydraulic regulation system connected to these hydraulic chambers enabling the extension of the end parts of these radial arms.

The system is characterized in that it comprises: on the one hand, stabilising means comprising:

a) a radial arm (40) fixed to the central axis (8) of the vehicle and extending towards the middle of the circumference at the bottom of the tunnel, close to and at a certain distance from the tunnel, and carrying an even number of stabilising wheels (6A, 6B) disposed transversely on each side of this radial arm and in contact with two flat surfaces (3A, 3B), between which these stabilising wheels move during the movement of the vehicle in the tunnel, and

b) a device (17) to apply an external pressure to these stabilising wheels to ensure that they remain in contact with the said flat surfaces during the movement of the vehicle in the tunnel, the device comprising an assembly of hydraulic cylinders to which each stabilising wheel is connected in an extendable fashion, and a controlled source of hydraulic pressure enabling a controlled hydraulic pressure to be transmitted to these cylinders in order to apply the outer stabilising wheels against the said flat surfaces, and, on the other hand, a braking device using deflectors comprising:

a) braking deflectors (42),

b) means of controlling the extension or retraction of these deflectors to enable them to project from the exterior of the body of the vehicle in order to offer resistance to the air and to cause deceleration of the vehicle, these controlling means comprising two hydraulic cylinders (42A and 42B) for each deflector and a controlled source of hydraulic pressure,

c) trap doors (41), disposed along the exterior surface of the vehicle, which can be selectively positioned to cover the said deflectors (42) when they are in the retracted position, to maintain the aerodynamic profile of the vehicle, and

d) an assembly for emission of jets of compressed air at high pressure (43) situated on each side of the deflectors (42) to eject air at high pressure in the direction of the movement of the vehicle during deceleration, to increase the braking effect of the said deflectors, this air being supplied in a selective manner by a source of compressed air.

# FIG.1

44A  1  5  24  23  44A  42  2  5

44B  42  43  4  7  6  44B  43  4  3

# FIG.9

23  23

3A  3B

# FIG.10

23

24

# FIG. 2

# FIG. 3

FIG. 4

FIG. 6

FIG. 5

# FIG.6A

# FIG.6B

# FIG.7

# FIG. 8

# FIG. 11